# EUROPEAN PATENT SPECIFICATION

(11) **EP 1 933 191 B1**
(45) Date of publication and mention of the grant of the patent: **10.11.2010**
(21) Application number: 07016306.8
(22) Date of filing: 20.08.2007
(51) Int. Cl.: G02F 1/1335, H01J 17/49

(54) **Film for display device, filter including film and display device including filter**
Film für Anzeigevorrichtung, Filter mit Film und Anzeigevorrichtung mit Filter
Film pour dispositif d'affichage, filtre comprenant le film et dispositif d'affichage comprenant le filtre

(30) Priority: 05.12.2006 KR 20060122422; 12.01.2007 KR 20070003659
(43) Date of publication of application: 18.06.2008
(73) Proprietor: LG Electronics Inc., Seoul 150-721 (KR)
(72) Inventor: Kim, Kangyoon, Chungcheongbuk-do 361-480 (KR); Sohn, Ji-Hoon, Chungcheongbuk-do 361-480 (KR); Cha, Hongrae, Chungcheongbuk-do 361-480 (KR); Lee, Seoungwon, Chungcheongbuk-do 361-480 (KR); Park, Tae Soon, Chungcheongbuk-do 361-480 (KR); Shin, Woonseo, Chungcheongbuk-do 361-480 (KR); Moon, Jin-San, Chungcheongbuk-do 361-480 (KR); Seo, Eunseong, Chungcheongbuk-do 361-480 (KR)
(74) Representative: von Hellfeld, Axel

(56) References cited:
- EP-A- 1 677 336
- US-A- 5 555 476
- US-B1- 6 504 981
- US-B1- 6 657 387

## Description

### BACKGROUND

### Field

This document relates to a display device, and more particularly, to a film for display device, a filter for display device including the film, and a display device including the filter.

### Description of the Background Art

A plasma display device is a kind of a flat panel display device. The plasma display device displays an image or information using a light emission phenomenon generated by a plasma discharge. The plasma display device is classified into an AC type plasma display device and a DC type plasma display device.

The plasma display device includes a plasma display panel displaying an image, and a filter for display device positioned in front of the plasma display panel.

The plasma display panel has the structure in which barrier ribs formed between a front panel and a rear panel form unit discharge cell or discharge cells. Each discharge cell is filled with an inert gas containing a main discharge gas such as neon (Ne), helium (He) or a mixture of Ne and He, and a small amount of xenon (Xe). The three discharge cells form one pixel. For example, a red (R) discharge cell, a green (G) discharge cell and a blue (B) discharge cell form one pixel.

When the plasma display panel is discharged by the application of a high frequency voltage to the unit discharge cell, the inert gas generates vacuum ultraviolet rays, which thereby cause phosphors formed between the barrier ribs to emit light, thus displaying an image.

The filter for display device may be positioned in front of various display panels in addition to the plasma display panel to improve the image quality and driving characteristics of display devices. A function and a structure of the filter for display device have been continuously studied.

Document US 5,555,476 A discloses a microlens array sheet comprising a first substance layer and a second substance layer having a refractive index less than that of the first substance layer. The first substance layer is composed of a transparent plastic layer forming unit lenses and the second substance layer may be composed of an air layer above the unit lenses. These unit lenses are arranged on a transparent plastic plate. Further, ray cut-off means with a taper section are provided on a surface of the transparent plastic plate and are disposed between the unit lenses adjacent to each other. The ray cut-off portions are made of acrylic resin filled with carbon black particles. When outer rays from the environment enter into the lens arrangement, they are repeated total reflected within the unit lenses, wherein the rays all pass through a certain constant area. The ray cut-off means are provided in these certain areas, whereby the reflected outer rays are absorbed.

Document US 6,657,387 B1 describes a plasma display panel which comprises a rear substrate, a plurality of electrodes, a discharge space and a transparent front substrate. Grooves are formed at the inner surface of the front substrate, wherein a black matrix is formed by filling the grooves with a black matrix material. This material is a light shielding material, such as an inorganic pigment of black colour or neutral density filter material. Further, the black matrix extends parallel to the electrodes. The external light is reflected by the electrodes between the front substrate and a dielectric layer, whereby the rays are input to and absorbed by the black matrix.

Document EP 1,677,336 A2 discloses a display filter which includes a filter base and an external light shielding layer. The external light shielding layer comprises a support, a matrix and a plurality of wedge-shaped black stripes disposed in the matrix. The matrix is made of a transparent resin and the plurality of wedge-shaped black stripes are arranged parallel to each other at a surface of the matrix. The black stripes are made of a light-absorbing material having a lower refractive index than the matrix to enable the total reflection of the incident light from the panel assembly. Thereby, the inclined surfaces of the black stripes absorb external light and totally reflect incident light from the panel assembly toward a viewer.

Document US 6,504,981 B1 discloses an emissive display which comprises a faceplate including a plurality of cones. Light pipes are defined between adjacent cones. A microlens array is arranged across the top of the light pipes. Further, the cones include an index matching material that absorbs light and the inwardly facing surface of each cone is black coloured to reduce stray light within the panel. The outer facing side of the cones is coated with a reflective coating, whereby the light produced by an emissive region is reflected from the cone through the microlens array towards the viewer.

### SUMMARY

Accordingly, exemplary embodiments provide a filter for display device including a film, and a display device including the filter capable of improving a contrast ratio.

Exemplary embodiments also provide a filter for display device including a film, and a display device including the filter capable of preventing a ghost phenomenon of an image.

In one aspect, there is provided use of a filter for display device according to claim 1.

Implementations may include one or more of the following features. For example, the first portion may have a cross section whose a width of one edge is different from a width of the other edge.

A color of the first portion may be darker than a color of the second portion.

The predetermined distances between the first portions may be different from each other, or equal to each other.

The refractive index of the first portion may be less than 1.3 times the refractive index of the second portion.

The first portion may comprise a black pigment.

The first portion may comprise a photosensitive resin and a black pigment.

In still another aspect, there is provided a display device according to claim 11.

The display panel may be one of a liquid crystal display panel and a plasma display panel.

It is to be understood that both the foregoing general description and the following detailed description are exemplary and explanatory and are intended to provide further explanation of the invention as claimed.

### BRIEF DESCRIPTION OF THE DRAWINGS

The accompanying drawings, which are included to provide a further understanding of the invention and are incorporated on and constitute a part of this specification, illustrate embodiments of the invention and together with the description serve to explain the principles of the invention. In the drawings:
FIG. 1 illustrates a film for display device;
FIG. 2 illustrates a cross section of the film for display device of FIG. 1;
FIGs. 3a to 3c illustrate an arrangement structure of a non-transmissive portion of a film for display device according to an exemplary embodiment;
FIGs. 4a and 4b illustrate a structure of a filter for display device according to an exemplary embodiment;
FIG. 5 illustrates a display device including a filter for display device of FIGs. 4a and 4b according to an exemplary embodiment;
FIG. 6 schematically illustrates a cross section of the display device of FIG. 5;
FIGs. 7a and 7b are views for explaining a ghost phenomenon generated when an image is displayed; and
FIG. 8 is a graph of an emission efficiency of image light depending on a refractive index of a film for display device.

### DETAILED DESCRIPTION OF EMBODIMENTS

Reference will now be made in detail embodiments of the invention examples of which are illustrated in the accompanying drawings.

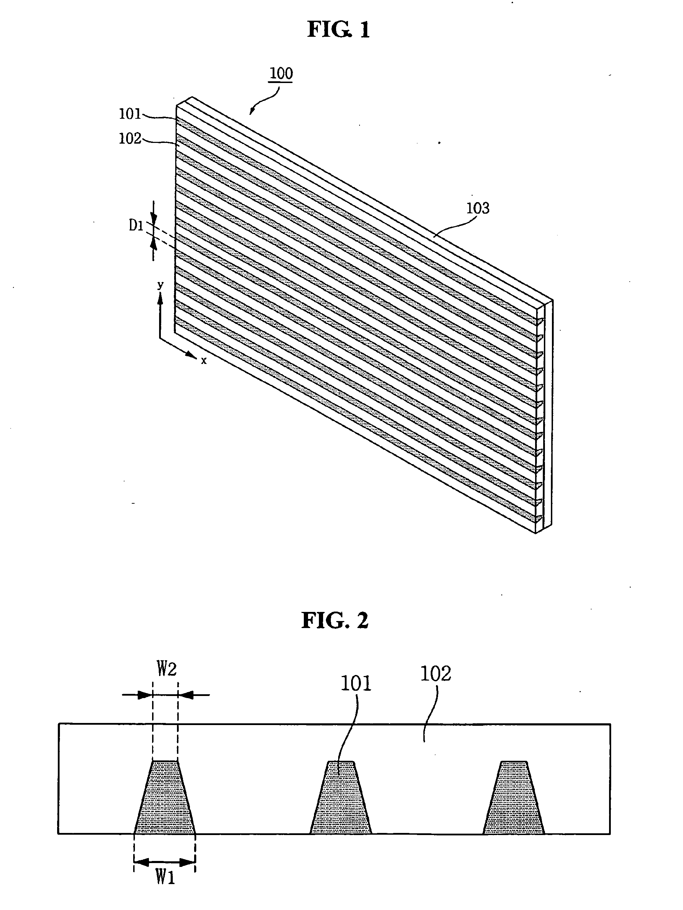

FIG. 1 illustrates a film for display device.

As illustrated in FIG. 1, the film for display device includes a transmissive portion 102 transmitting light (hereinafter referred to as a second portion), a non-transmissive portion 101 (hereinafter referred to as a first portion), and a base film 103 supporting the transmissive portion 102 and the non-transmissive portion 101. The non-transmissive portions 101 are positioned to be spaced with a predetermined distance therebetween inside the transmissive portion 102.

The first portion 101 includes at least one of a black pigment and a photosensitive resin capable of absorbing light. The photosensitive resin may be formed by mixing at least one selected from the group of consisting of thermosetting resin, photo-crosslinked resin or ultraviolet (UV) curable polymer.

Predetermined distances D1 between the first portions 101 may be equal to one another. At least one of the predetermined distances D1 may be different from the other distances D1. This compensates a difference between contrast ratios of an image generated at a predetermined position of a display panel due to structural characteristics of the display panel.

The second portion 102 includes a transparent resin such as UV-curable polymer capable of transmitting light. UV-curable polymer may include polyester, urethane, epoxy, or oligomer containing silicon and acryl functionalities, or monomer.

The first portion 101 may include a material darker than the second portion 102 to absorb light. Hence, when an image is displayed, a contrast characteristic can be improved. In particular, a refractive index of the first portion 101 is larger than a refractive index of the second portion 102. When the refractive index of the first portion 101 is larger than the refractive index of the second portion 102, a ghost phenomenon generated during the display of an image is prevented and the image quality is improved.

The base film 103 is formed of a transparent resin. Examples of the transparent resin include polyethyleneterephthalate (PET), polycarbonates (PC), polyvinyl chloride (PVC).

FIG. 2 illustrates a cross section of the film for display device of FIG. 1.

As illustrated in FIG. 2, the first portion 101 has a cross section whose a width w1 of one edge is different from a width w2 of the other edge. In other words, the first portion 101 has a trapezoid-shaped cross section having a slope between one edge and the other edge of the first portion 101.

Although it is not shown in the drawings, the first portion 101 may have one of a triangular shape, a tetragonal shape, a circle of curvature shape, and a wedged shape. The above-described cross section shapes of the first portion 101 facilitate a process for fabricating the film for display device.

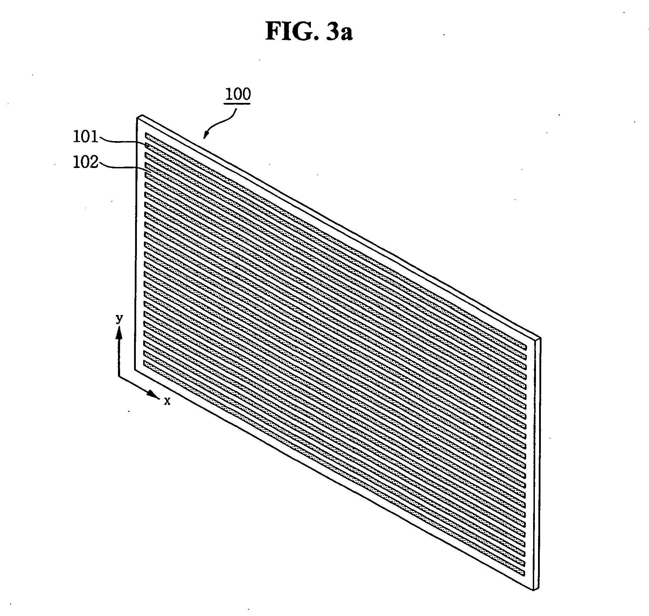

FIGs. 3a to 3c illustrate an arrangement structure of a non-transmissive portion of a film for display device according to an exemplary embodiment.

In a film 100 for display device of FIG. 3a, the plurality of first portions 101 (the non-transmissive portions) are arranged in a stripe form in an X-axis direction. An area except the first portion 101 is the second portion 102 (the transmissive portion). In this case, the X-axis direction is a horizontal direction of a display panel displaying an image.

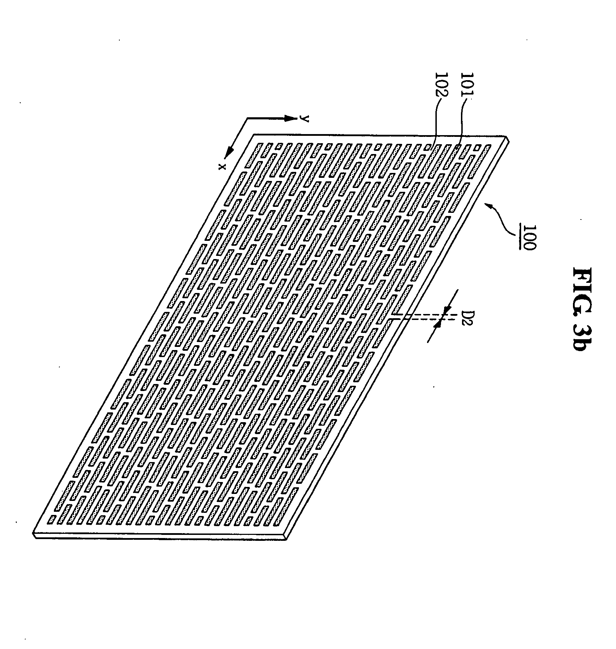

In a film 100 for display device of FIG. 3b, the plurality of rectangular-shaped first portions 101 are arranged in an X-axis direction. In this case, distances D2 between the rectangular-shaped first portions 101 in the X-axis direction may be equal to one another. At least one of the distances D2 between the rectangular-shaped first portions 101 may be different from the other distances D2. The arrangement structure of the first portions 101 compensates a difference between contrast ratios of an image generated at a predetermined position of a display panel.

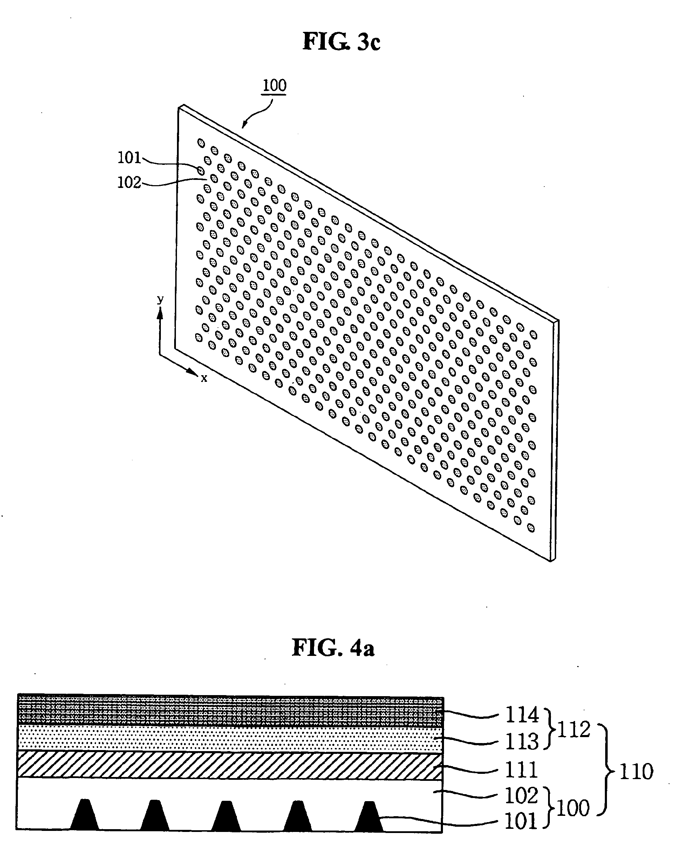

In a film 100 for display device of FIG. 3c, the plurality of first portions 101 each having a circle-shaped cross section are arranged.

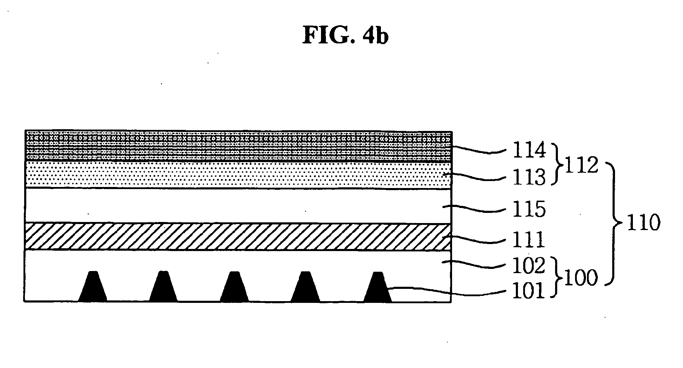

FIGs. 4a and 4b illustrate a structure of a filter for display device according to an exemplary embodiment.

A filter 110 for display device is roughly classified into a film filter illustrated in FIG. 4a and a glass filter illustrated in FIG. 4b.

First, as illustrated in FIG. 4a, a film filter 110 includes a film 100 illustrated in FIG. 1 for compensating brightness, and a functional film. The functional film includes at least one of an electromagnetic interference (EMI) shielding film 111 and a color correction film 112. The color correction film 112 includes at least one of a near-infrared ray shielding film 113 and an anti-reflection film 114. The plurality of layers constituting the film filter 110 can be stacked regardless of the stacking order. However, the brightness compensation film 100 may use as a base layer, and the functional films may be stacked on the brightness compensation film 100. In this case, the stacking order of the functional films is not limited.

Next, as illustrated in FIG. 4b, a glass filter 110 includes a brightness compensation film 100 illustrated in FIG. 1, a functional film, and a glass 115. An EMI shielding film 111 and the brightness compensation film 100 are positioned under the glass 115, and a color correction film 112 is positioned on the glass 115. The color correction film 112 includes at least one of a near-infrared ray shielding film 113 and an anti-reflection film 114 in the same way as the film filter of FIG. 4a. The plurality of layers constituting the glass filter 110 can be stacked regardless of the stacking order in the same way as the film filter of FIG. 4a. However, the brightness compensation film 100 may use as a base layer, and the functional films may be stacked on the brightness compensation film 100.

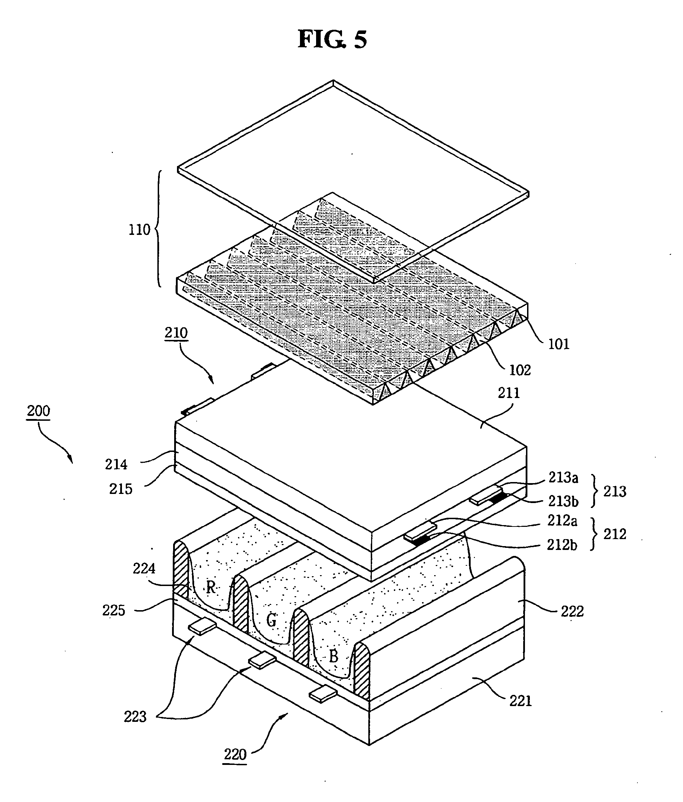

FIG. 5 illustrates a display device including a filter for display device of FIGs. 4a and 4b according to an exemplary embodiment.

As illustrated in FIG. 5, a display device includes a display panel 200 and a filter 110 for display device.

The display panel 200 may include a panel of a flat panel display device such as a liquid crystal display (LCD) or a plasma display panel (PDP). For instance, the display panel 200 includes a front panel 210 and a rear panel 220 which are coupled in parallel to oppose to each other at a given distance therebetween. The front panel 210 includes a front substrate 211 which is a display surface displaying an image. The rear panel 220 includes a rear substrate 221 constituting a rear surface. A plurality of scan electrodes 212 and a plurality of sustain electrodes 213 are formed in pairs on the front substrate 211 to form a plurality of maintenance electrode pairs. A plurality of data electrodes 223 are arranged on the rear substrate 221 to intersect the plurality of maintenance electrode pairs.

The scan electrode 212 and the sustain electrode 213 generate a mutual discharge therebetween in one discharge cell and maintain light-emissions of discharge cells. The scan electrode 212 and the sustain electrode 213 each comprise transparent electrodes 212a and 213a made of a transparent ITO material and bus electrodes 212b and 213b made of a metal material. Moreover, the scan electrode 212 and the sustain electrode 213 each may comprise only the transparent electrode or only the bus electrode. The scan electrode 212 and the sustain electrode 213 are covered with one or more upper dielectric layers 214 for limiting a discharge current and providing insulation between the maintenance electrode pairs. A protective layer 215 with a deposit of magnesium oxide (MgO) is formed on an upper surface of the upper dielectric layer 214 to facilitate discharge conditions.

A plurality of stripe-type or well-type barrier ribs 222 are formed in parallel to each other on the rear substrate 221 of the rear panel 220 to form a plurality of discharge spaces, i.e., a plurality of discharge cells. The plurality of data electrodes 223 for performing an address discharge to generate vacuum ultraviolet rays are arranged in parallel to the barrier ribs 222. An upper surface of the rear substrate 221 is coated with red (R), green (G) and blue (B) phosphors 224 for emitting visible light for an image display during the generation of the address discharge. A lower dielectric layer 225 is formed between the data electrodes 223 and the phosphors 224 to protect the data electrodes 223.

The front panel 210 and the rear panel 220 thus formed are coalesced using a sealing process to complete the display panel 200. The drivers (not illustrated) for driving the scan electrode 212, the sustain electrode 213 and the data electrode 223 are attached to the display panel 200.

The filter 110 for display device is positioned in front of the display panel 200, and includes the film 100 illustrated in FIG. 1. The first portion 101 of the film 100 has a larger cross-sectional area as it goes toward the display panel 200.

Because a refractive index of the first portion 101 of the film 100 is larger than a refractive index of the second portion 102 of the film 100, the first portion 101 blocks the reflection of external light and a ghost phenomenon is prevented. Hence, a contrast ratio of the display device is improved.

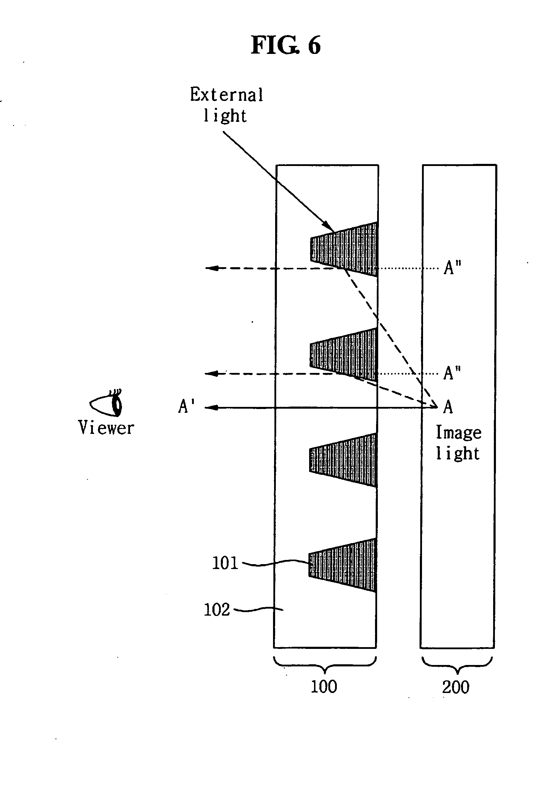

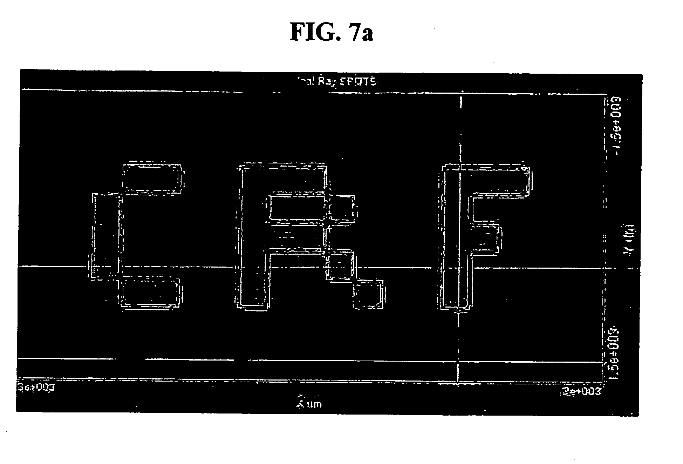

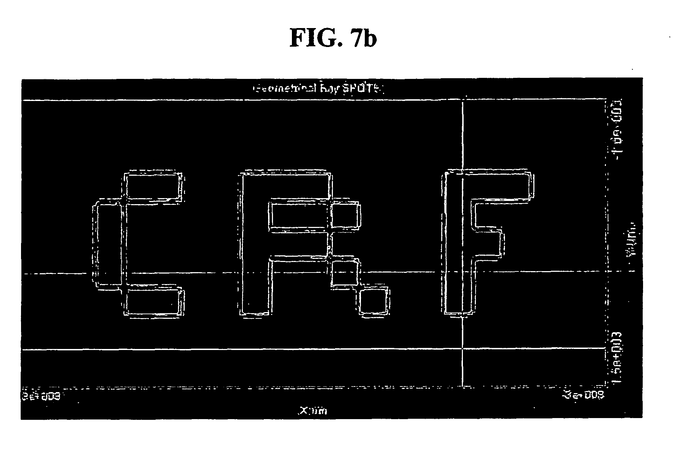

FIG. 6 schematically illustrates a cross section of the display device of FIG. 5. FIGs. 7a and 7b are views for explaining a ghost phenomenon generated when an image is displayed.

Referring to FIG. 6 and FIGs. 7a and 7b, image light emitted from an area A of the display panel 200 is transmitted through the second portion 102, and then a viewer watches the image light through his eye in an area A'. However, when image light emitted from the area A is incident on the first portion 101 through the second portion 102, reflectivity of the image light changes due to a refractive index of the first portion 101 and a refractive index of the second portion 102. In other words, when the refractive index of the second portion 102 is larger than the refractive index of the first portion 101, the image light incident on the first portion 101 through the second portion 102 is totally reflected in the first portion 101. In this case, the viewer recognizes the image light emitted from the area A as image light emitted from an area A" of the display panel 200. This is a ghost phenomenon in which an image runs on the screen or the image overlaps doubly, as illustrated in FIG. 7a.

However, when the refractive index of the first portion 101 is larger than the refractive index of the second portion 102, image light incident on the first portion 101 through the second portion 102 is not totally reflected in the first portion 101. In other words, while image light incident on the first portion 101 through the second portion 102 is partially reflected in the first portion 101 due to a difference between the refractive index of the first portion 101 and the refractive index of the second portion 102, the image light is not totally reflected in the first portion 101 because total reflection conditions of image light are not satisfied. Accordingly, a ghost phenomenon is prevented and a clear image is displayed on the display panel 200 as illustrated in FIG. 7b.

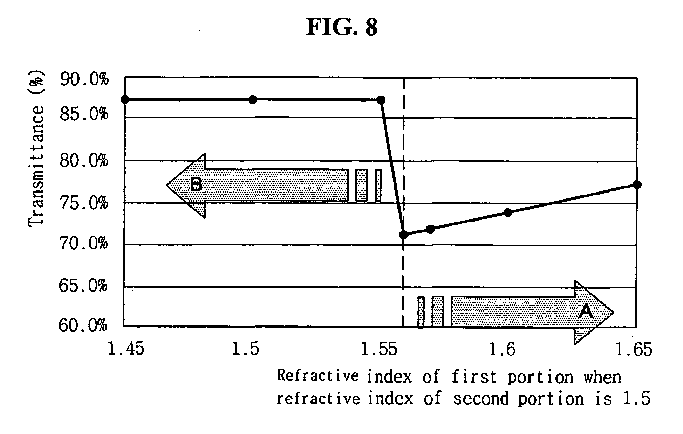

FIG. 8 is a graph of an emission efficiency of image light depending on a refractive index of a film for display device.

As illustrated in FIG. 8, when the refractive index of the second portion 102 is 1.5 and the refractive index of the first portion 101 is smaller than the refractive index of the second portion 102, the image light emitted from the display panel 200 is totally reflected in the first portion 101. Accordingly, transmittance of the display panel 200 increases and then is maintained at a predetermined value (i.e., at 87.0 %). As above, when the transmittance of the display panel 200 increases due to the total reflection, the contrast characteristic of the display device is improved. However, this leads to the ghost phenomenon. An arrow B in FIG. 8 indicates a generation direction of total reflection of the image light in the first portion 101.

On the other hand, when the refractive index of the first portion 101 is larger than the refractive index of the second portion 102, image light emitted from the display panel 200 is not totally reflected in the first portion 101, reflectivity of the image light emitted from the display panel 200 increases in the first portion 101 due to a difference between the refractive index of the first portion 101 and the refractive index of the second portion 102, and transmittance of the display panel 200 increases. Accordingly, the contrast characteristic of the display device is improved. However, when the refractive index of the first portion 101 continuously increases as compared with the refractive index of the second portion 102, the reflectivity of the image light increases in the first portion 101. This may lead to the ghost phenomenon.

Accordingly, the refractive index of the first portion 101 is larger than and equal to or less than 1.3 times the refractive index of the second portion 102.

An arrow A in FIG. 8 indicates an increasing direction of reflectivity of the image light in the first portion 101.

As described above, the display device according to the exemplary embodiment improves the contrast characteristic by increasing the emission efficiency of image light of the display panel, and prevents the ghost phenomenon by controlling the refractive index of the film for display device. Accordingly, the image quality of the display device is improved.

## Claims

1. Use of a filter (110) for improving contrast ratio of an image displayed by a display device, the use including positioning the filter (110) in front of a display panel (200) of said display device, said display panel (200) having a front panel (210) comprising a front display surface for displaying the image, the filter (110) comprising:
- a plurality of non-transmissive portions (101) positioned to be spaced with a predetermined distance (D1) therebetween, each non-transmissive portion having a larger cross-sectional area as it goes coward the display panel; and
- a plurality of light-transmissive portions (102), each light-transmissive portion (102) being positioned between the non-transmissive portions;
**characterized in that** the refractive indices of the non-transmissive and light-transmissive portions are chosen such as to prevent total reflection of light incident on the non-transmissive portions through the light-transmissive portions, wherein a refractive index of the non-transmissive portions (101) is larger than a refractive index of the light transmissive portions (102).

2. Use of claim 1, wherein the non-transmissive portions (101) have a darker color than the light-transmissive portions (102).

3. Use of claim 1 or 2, wherein the predetermined distance (D1) is equal for all non-transmissive portions (101).

4. Use of claim 1 or 2, wherein at least one of the predetermined distances (D1) is different from the other predetermined distances.

5. Use of any one preceding claim, wherein the non-transmissive portions (101) have one of a triangular, tetragonal, circularly curved, and wedged cross-sectional shape.

6. Use of any one preceding claim, wherein the refractive index of the non-transmissive portions (101) is less than 1.3 times the refractive index of the light-transmissive portions (102).

7. Use of any one preceding claim, wherein the non-transmissive portions (101) comprise at least one of a black pigment and a photosensitive resin capable of absorbing light.

8. Use of any one preceding claim, wherein positioning the filter (110) in front of the display panel (200) includes positioning the filter (110) comprising a film (100) in front of the display panel, the filter including, in addition to the film, at least one of a near-infrared ray shielding film (113), a color correction film (112), an anti-reflection film (114), and an electromagnetic interference shielding film (111).

9. Use of any one preceding claim, wherein the display panel (200) is one of a liquid crystal display panel and a plasma display panel.

10. Use of any one preceding claim, wherein the filter further comprises a base film (103) supporting the non-transmissive and light-transmissive portions (101, 102).

11. A display device, comprising:
- a display panel (200) having a front panel (210) comprising a front display surface for displaying an image; and
- a filter (110) positioned in front of the display panel and including a plurality of non-transmissive portions (101) positioned to be spaced with a predetermined distance (D1) therebetween and a plurality of light-transmissive portions (102), each light-transmissive portion (102) being positioned between the non-transmissive portions, each non-transmissive portion having a larger cross-sectional area as it goes toward the display panel; **characterized in that** the refractive indices of the non-transmissive and light-transmissive portions are chosen such as to prevent total reflection of light incident on the non-transmissive portions through the light-transmissive portions, wherein a refractive index of the non-transmissive portions (101) is larger than a refractive index of the light-transmissive portions (102).

## Patentansprüche

1. Verwendung eines Filters (110) zur Verbesserung des Kontrastverhältnisses eines durch eine Anzeigevorrichtung angezeigten Bildes, wobei die Verwendung das Anordnen des Filters (110) vor einer Anzeigetafel (200) der Anzeigevorrichtung umfasst und die Anzeigetafel eine Frontplatte (210) mit einer vorderen Anzeigefläche zum Anzeigen des Bilds aufweist, wobei der Filter (110) umfasst:
- eine Vielzahl von undurchlässigen Abschnitten (101), die so angeordnet sind, dass sie einen vorgegebenen Abstand (D1) voneinander aufweisen, wobei jeder undurchlässige Abschnitt in Richtung hin zur Anzeigetafel eine zunehmende Querschnittsfläche aufweist; und
- eine Vielzahl von lichtdurchlässigen Abschnitten (102), wobei jeder lichtdurchlässige Abschnitt (102) zwischen den undurchlässigen Abschnitten angeordnet ist,
**dadurch gekennzeichnet, dass** die Brechungsindizes der undurchlässigen und der lichtdurchlässigen Abschnitte derart gewählt sind, dass sie eine Totalreflektion von durch die lichtdurchlässigen Abschnitte auf die undurchlässigen Abschnitte einfallendem Licht verhindern, wobei ein Brechungsindex der undurchlässigen Abschnitte (101) größer als ein Brechungsindex der lichtdurchlässigen Abschnitte (102) ist.

2. Verwendung nach Anspruch 1, bei der die undurchlässigen Abschnitte (101) eine dunklere Farbe als die lichtdurchlässigen Abschnitte (102) haben.

3. Verwendung nach Anspruch 1 oder 2, bei der der vorgegebene Abstand (D1) für alle undurchlässigen Abschnitte (101) gleich ist.

4. Verwendung nach Anspruch 1 oder 2, bei der mindestens einer der vorgegebenen Abstände (D1) sich von den anderen vorgegebenen Abständen unterscheidet.

5. Verwendung nach einem der vorhergehenden Ansprüche, bei der die undurchlässigen Abschnitte (101) eine dreieckförmige, eine tetragonale, eine kreisförmig gekrümmte oder eine keilartige Querschnittsform aufweisen.

6. Verwendung nach einem der vorhergehenden Ansprüche, bei der der Brechungsindex der undurchlässigen Abschnitte (101) weniger als das 1,3 fache des Brechungsindex der lichtdurchlässigen Abschnitte (102) beträgt.

7. Verwendung nach einem der vorhergehenden Ansprüche, bei der die undurchlässigen Abschnitte (101) ein schwarzes Pigment und/oder ein lichtempfindliches Harz, das zur Lichtabsorption geeignet ist, aufweist.

8. Verwendung nach einem der vorhergehenden Ansprüche, bei der das Anordnen des Filters (110) vor der Anzeigetafel (200) das Anordnen des Filters (110) mit einem Film (100) vor der Anzeigetafel umfasst, wobei der Filter zusätzlich zu dem Film einen infrarotnahe Strahlen zurückhaltenden Film (113), einen Farbkorrekturfilm (112), einen Antireflektionsfilm (114) und/oder einen elektromagnetische Strahlung abschirmenden Film (111) umfasst.

9. Verwendung nach einem der vorhergehenden Ansprüche, bei der die Anzeigetafel (200) eine Flüssigkristall-Anzeigetafel oder eine Plasma-Anzeigetafel ist.

10. Verwendung nach einem der vorhergehenden Ansprüche, bei der der Filter ferner einen Grundfilm (103) aufweist, welcher die undurchlässigen und die lichtdurchlässigen Abschnitte (101, 102) trägt.

11. Eine Anzeigevorrichtung, die umfasst:
- eine Anzeigetafel (200) mit einer Frontplatte (210), welche eine vordere Anzeigefläche zum Anzeigen eines Bilds aufweist; und
- einen Filter (110), der vor der Anzeigetafel angeordnet ist und eine Vielzahl von undurchlässigen Abschnitten (101) hat, die so angeordnet sind, dass sie einen vorgegebenen Abstand (D1) voneinander haben, sowie eine Vielzahl von lichtdurchlässigen Abschnitten (102) hat, wobei jeder lichtdurchlässige Abschnitt (102) zwischen den undurchlässigen Abschnitten angeordnet ist, wobei jeder undurchlässige Abschnitt in Richtung hin zur Anzeigetafel eine zunehmende Querschnittsfläche aufweist; und
**dadurch gekennzeichnet, dass** die Brechungsindizes der undurchlässigen und der lichtdurchlässigen Abschnitte derart gewählt sind, dass sie eine Totalreflektion von durch die lichtdurchlässigen Abschnitte auf die undurchlässigen Abschnitte einfallendem Licht verhindern, wobei ein Brechungsindex der undurchlässigen Abschnitte (101) größer als ein Brechungsindex der lichtdurchlässigen Abschnitte (102) ist.

## Revendications

1. Utilisation d'un filtre (110) pour améliorer un rapport de contraste d'une image affichée par un dispositif d'affichage, l'utilisation incluant le positionnement du filtre (110) devant un panneau d'affichage (200) dudit dispositif d'affichage, ledit panneau d'affichage (200) ayant un panneau avant (210) comprenant une surface d'affichage avant pour afficher l'image, le filtre (110) comprenant :
- une pluralité de parties non transmissives (101) positionnées de façon à être espacées avec une distance prédéterminée (D1) entre celles-ci, chaque partie non transmissive ayant une superficie en coupe plus grande plus elle se rapproche du panneau d'affichage ; et
- une pluralité de parties transmissives de la lumière (102), chaque partie transmissive de la lumière (102) étant positionnée entre les parties non transmissives ; **caractérisée en ce que** les indices de réfraction des parties non transmissives et des parties transmissives de la lumière sont choisis de façon à empêcher une réflexion totale d'une lumière incidente sur les parties non transmissives à travers les parties transmissives de la lumière,
dans laquelle un indice de réfraction des parties non transmissives (101) est plus grand qu'un indice de réfraction des parties transmissives de la lumière (102).

2. Utilisation selon la revendication 1, dans laquelle les parties non transmissives (101) ont une couleur plus sombre que les parties transmissives de la lumière (102).

3. Utilisation selon la revendication 1 ou 2, dans laquelle la distance prédéterminée (D1) est égale pour toutes les parties non transmissives (101).

4. Utilisation selon la revendication 1 ou 2, dans laquelle au moins une des distances prédéterminées (D1) est différente des autres distances prédéterminées.

5. Utilisation selon une quelconque revendication précédente, dans laquelle les parties non transmissives (101) ont l'une d'une forme de section transversale triangulaire, tétragonale, circulairement incurvée et en coin.

6. Utilisation selon une quelconque revendication précédente, dans laquelle l'indice de réfraction des parties non transmissives (101) est inférieur à 1,3 fois l'indice de réfraction des parties transmissives de la lumière (102).

7. Utilisation selon une quelconque revendication précédente, dans laquelle les parties non transmissives (101) comprennent au moins l'un d'un pigment noir et d'une résine photosensible apte à absorber la lumière.

8. Utilisation selon une quelconque revendication précédente, dans laquelle le positionnement du filtre (110) devant le panneau d'affichage (200) inclut le positionnement du filtre (110) comprenant un film (100) devant le panneau d'affichage, le filtre incluant, outre le film, au moins l'un d'un film de protection contre un rayonnement dans le proche infrarouge (113), d'un film de correction de couleurs (112), d'un film antireflets (114), et d'un film de protection contre les interférences électromagnétiques (111).

9. Utilisation selon une quelconque revendication précédente, dans laquelle le panneau d'affichage (200) est l'un d'un panneau d'affichage à cristaux liquides et d'un panneau d'affichage à plasma.

10. Utilisation selon une quelconque revendication précédente, dans laquelle le filtre comprend en outre un film de base (103) supportant les parties non transmissives et les parties transmissives de la lumière (101, 102).

11. Dispositif d'affichage, comprenant :
- un panneau d'affichage (200) ayant un panneau avant (210) comprenant une surface d'affichage avant pour afficher une image ; et
- un filtre (110) positionné devant le panneau d'affichage et incluant une pluralité de parties non transmissives (101) positionnées de façon à être espacées avec une distance prédéterminée (D1) entre celles-ci et une pluralité de parties transmissives de la lumière (102), chaque partie transmissive de la lumière (102) étant positionnée entre les parties non transmissives, chaque partie non transmissive ayant une superficie en coupe plus grande plus elle se rapproche du panneau d'affichage ; **caractérisé en ce que** les indices de réfraction des parties non transmissives et des parties transmissives de la lumière sont choisis da façon à empêcher une réflexion totale d'une lumière incidente sur les parties non transmissives à travers les parties transmissives de la lumière, dans lequel un indice de réfraction des parties non transmissives (101) est plus grand qu'un indice de réfraction des parties transmissives de la lumière (102).
